# EUROPEAN PATENT SPECIFICATION

(11) **EP 0 558 108 B1**
(45) Date of publication and mention of the grant of the patent: **25.09.1996**
(21) Application number: 93200244.7
(22) Date of filing: 01.02.1993
(51) Int. Cl.: A61G 7/00, A61G 7/005, A61G 7/012, B60B 33/02, H01H 9/02

(54) **Universally adjustable bed**
Universell einstellbares Bett
Lit ajustable universellement

(30) Priority: 30.01.1992 NL 9200169
(43) Date of publication of application: 01.09.1993
(73) Proprietor: SCHELL INDUSTRIES B.V., NL-5951 AV Belfeld (NL)
(72) Inventor: Mevissen, Herman Maria, NL-5913 BK Venlo (NL); Op het Roodt, Alphonsus Johannus Theodorus Maria, NL-5926 PN Hout-Blerick (NL)
(74) Representative: Hoorweg, Petrus Nicolaas

(56) References cited:
- AU-A- 490 196
- DE-A- 2 102 508
- DE-A- 3 602 916
- DE-B- 1 191 930
- NL-A- 7 505 178
- US-A- 2 477 400
- US-A- 3 802 002
- US-A- 3 826 528
- US-A- 4 435 862

## Description

The invention relates to a bed, in particular a hospital bed, provided with a frame for supporting a mattress or the like, a support structure bearing the frame and having at least one pair of castor wheels which are height-adjustable relative to the frame, wherein the or each pair of castor wheels is arranged on the one end of a supporting member having a constant length, wherein an associated shore element is provided with an electric motor for changing the length of the shore element, and a second shore element is arranged between said supporting member and the bed frame.

Such a bed is disclosed in AU-A-490 196.

With beds of the type described in the preamble, in particular hospital beds, it is known to change the position of the mattress such that a trendelerburger position or anti-trendelerburger position can be obtained to place the patient in the correct position for his therapy. The mattress can also be placed in folded position to prevent bedsores in the different lying positions. The invention has for its object to construct a bed as stated above such that adjusting the bed is facilitated, the treatment of the patient takes place more ergonomically for the nurse, the control for the adjustment of the bed can if necessary take place using computers, whereby the desired positions can be reached rapidly, and the bed moreover becomes easily manoeuvrable.

The bed according to the invention is distinguished in that the other end of the support element remote from the castor wheels is slidable along a guide of the frame, this such that with a small change in the length of the first shore element a large angular rotation of the support element takes place, by which the desired bed adjustment is rapidly obtained.

Adjustment of the supporting member by means of an electric motor ensures that the bed can be placed at different heights without the mattress support having to be adjusted. The trendelerburger position or anti-trendelerburger position can be reached easily by adjusting to the correct measure the height difference of the supporting members or the difference in the angular position of the supporting members.

By applying two or more motors per bed which are operated simultaneously or independently of each other, a particularly rapid adjustment of the bed can be obtained.

The wheels can moreover be moved straight up and downward relative to the frame so that the distance between the pairs of wheels does not change and the bed will not undergo any horizontal displacement.

Above mentioned and other features of the invention will be elucidated further in the figure description of an embodiment hereinbelow. In the drawing:
Fig. 1 shows a standing side view of a bed according to the invention,
fig. 2 shows a standing front view of the bed according to fig. 1,

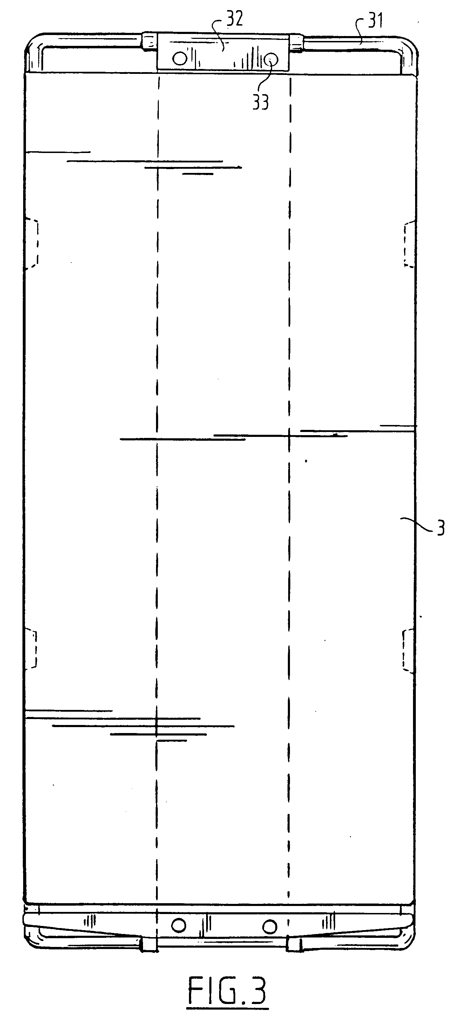

fig. 3 shows a top view of the bed according to fig. 1 and 2,
fig. 4 shows a perspective view of a bed according to the invention provided with an improved mattress holder,
fig. 5 shows a standing side view, partially in cross-section, of a castor wheel suitable for a bed according to the invention,
fig. 6 shows an exploded view of a manually operated keyboard for controlling the different electrical functions in the bed according to the invention.

The bed shown in the drawing comprises a frame 1 constructed from suitable profiles, for example tubular profiles, which frame serves to support a tray-like mattress holder 2 in which is accommodated a mattress 3. The tray-like mattress holder 2 consists of a number of mutually hingeable parts, four parts in the embodiment shown here, whereby it is possible to place the mattress in the position indicated by the broken line a. The adjustment of the mattress holder 2 can take place manually or with an electric motor 4 which is arranged on the underside of the frame 1. This motor is coupled to two transverse shafts 5 which are mounted in the frame 1 and onto which are fastened pivot arms 6 which engage onto the underside of the mattress holder 2.

Any adjustment embodiment is possible within the scope of the invention.

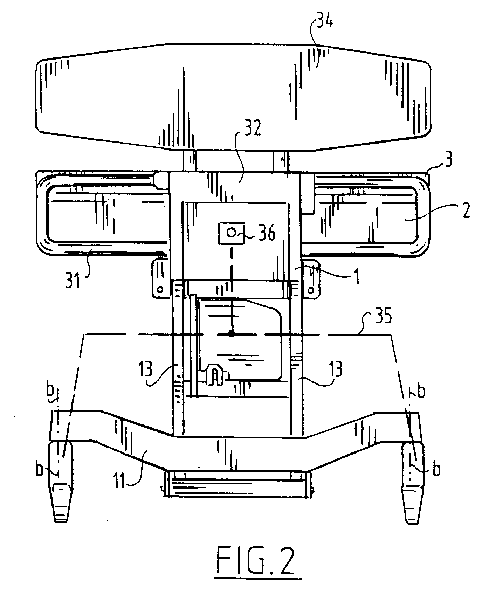

The frame 1 is supported according to the invention by two pairs of castor wheels 10, wherein each pair is mutually connected by a transverse beam 11, see fig. 2, which forms part of the supporting member 12 which consists of two arms 13 which extend mutually parallel. Here the arms 13 are pivotally coupled at the lower end to the beam 11 and embodied at the other end with a sliding sleeve 14 which is slidable parallel to the underside of the frame 1 along a guide rod 15.

The middle of the arm 13 is provided at 16 with a rotation point onto which an angle lever 17 connects pivotally. The other end of the angle lever 17 is pivotally coupled at 18 to the underside of the frame 1.

Arranged at 19 in the bend of the angle lever 17 is the pivot point of the housing of an electric motor 20 which is extended on the other end with a threaded rod 21 which is pivotally connected at 22 to the frame 1. The electric motor 20 and threaded rod 21 herein function as first shore element and the angle lever 17 as second shore element necessary for adjusting respectively the arm 13 and the support structure 12 relative to the frame 1.

It is noted that the arm 11 is held in the correct position relative to the frame 1 by means of a coupling rod 25 which extends along the arm 13 and which is pivotally connected on one side to the beam 11 and on the other side to a triangular coupling plate 26. At the other angular point the coupling plate 26 is rotatable at 16 relative to the arm 13, wherein the third angular point is coupled to a second coupling rod 27 which is pivotally arranged on the lower end of the frame. The beam 11 with the castor wheels 10 hereby retains the same vertical position in all adjustment positions of the frame 1.

The adjustment of the bed by means of the motors 20, two of which are arranged in the embodiment shown here for both the left and right-hand pair of castor wheels 10, takes place as follows.

By extending the threaded rod 21, which becomes possible by energizing electric motor 20, the distance between the points 22 and 19 is enlarged, whereby the point 16 will move away from the frame 1. This movement causes the sliding bush 14 to slide along the guide rod 15 in the direction of the outer end of the frame 1, whereby the angular position of the arm 13 relative to frame 1 changes and the pair of castor wheels 10 move away from the frame. This results in a raising of frame 1 in relation to the ground. When the threaded rod 21 is shortened a reverse movement takes place and frame 1 descends in relation to the ground. It is herein noted that with an equal distance between the rotation points 16-18 and between rotation point 16 and castor wheel 10 the castor wheel moves straight under the frame which does not then undergo any horizontal displacement.

The adjustment obtained with the construction shown enables continuous adjustment of frame 1 from 29 cm to 91 cm above the ground.

By simultaneously operating the motors 20 it is possible to carry the frame 1 parallel to itself from a low to a high position or vice-versa, wherein the horizontal position of the frame 1 does not change. By variably energizing motors 20 it is possible to carry the frame 1, and thereby the mattress, into respectively a trendelerburger position and an anti-trendelerburger position without manual intervention being necessary.

With the embodiment shown here it is possible to give the frame 1 a considerably narrower form than is normal relative to the mattress holder, for example 350 mm wide. This offers the advantage that nursing staff can reach the patient more easily, because the mattress as it were protrudes over the side of the support frame. The lifting distance for the nursing staff is hereby short and work can be done on the bed in sitting position as if it were a table, see end view in fig. 2. A particularly ergonomically sound work area is hereby created.

It is further noted that the frame 1 is formed at both ends such that an upward inclining portion 30 is obtained which serves inter alia to support two bracket-like end pieces 31, which enable gripping of the bed by hand and manoeuvering thereof without touching the mattress holder 2.

It is also noted that the castor wheels 10 are embodied as swivel castors which are rotatable about a vertical rotation axis b-b relative to the beam 11.

By means of a schematically designated hydraulic or pneumatic pipe system 35 it is possible to simultaneously block all the wheels with a central control, see handle 36, whereby the bed is immobilized.

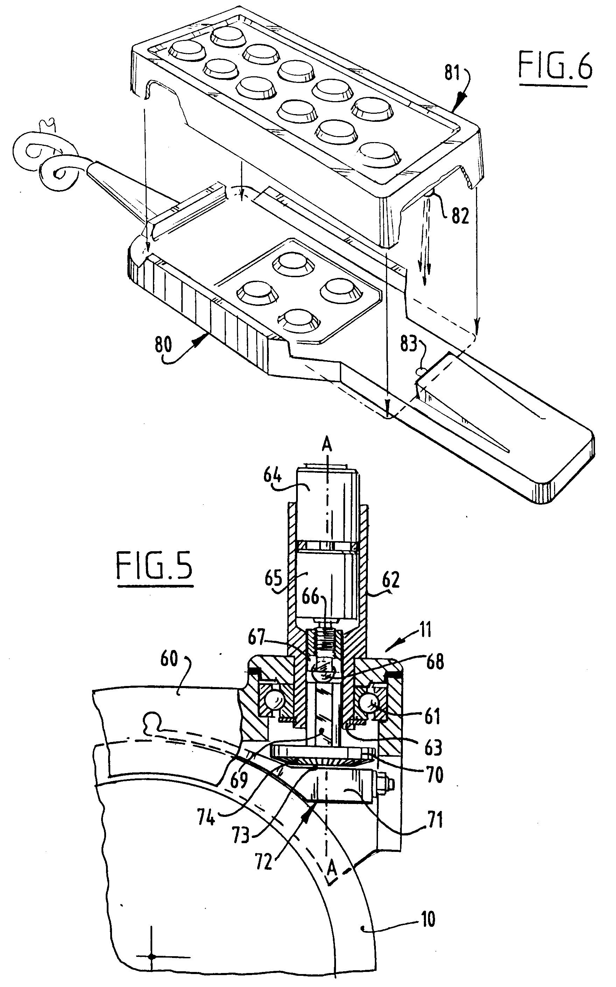

It is noted that the castor wheels can be blocked electrically, as depicted in fig. 5, the further explanation thereof will follow herebelow.

Finally, it is noted that the top end of the upward inclining piece 30 of frame 1 is provided with a support block 32 provided with two bores 33 in which can be placed accessories such as a headboard and/or footboard. Removable anti-fall rails can be arranged between headboard and/or footboard on both sides of the mattress holder.

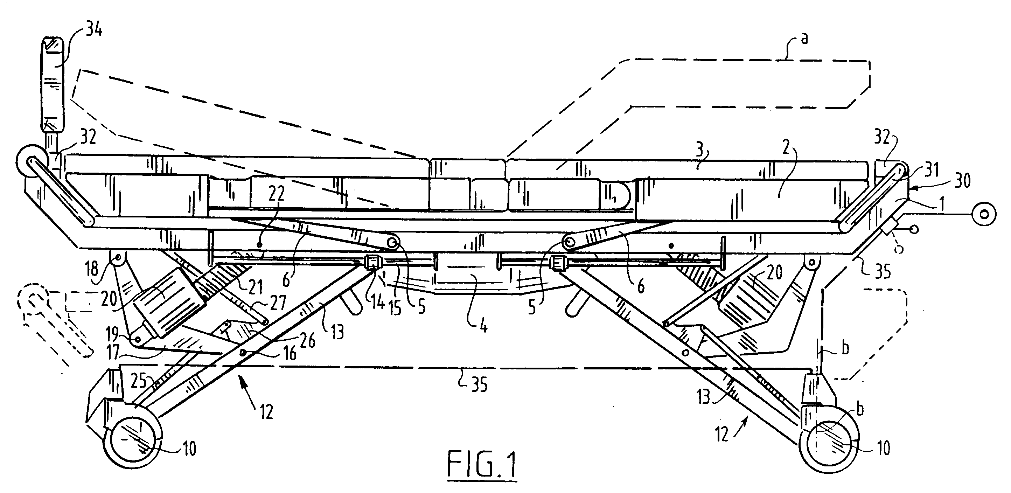

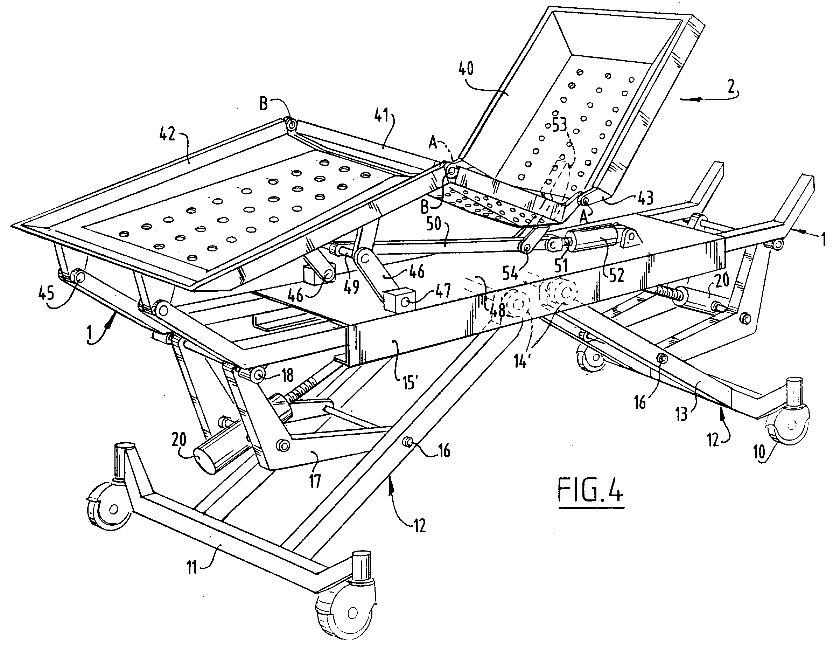

Fig. 4 shows an alternative embodiment wherein the frame 1 and both supports 12 practically correspond in design and function with the bed of fig. 1. The same components are designated with the same reference numerals.

In this embodiment the guide rod 15 is omitted and replaced here by a U-shaped inward pointing guide gutter 15', in which a wheel 14' of the supporting member 13 is guided.

The embodiment in fig. 4 is further distinguished by an improved mattress holder 2. This consists of three tub-like elements 40, 41 and 42 which are hingedly connected to each other. The hinge elements 43 and 44 respectively are chosen such that the pivot axes A-A and B-B respectively lie higher than the bottom of the tub-like elements 40-42, so that during a pivoting movement of these elements the rotation takes place around the natural line of pivot of respectively the hip of the patient and the knee joint thereof. The patient hereby experiences no unpleasant movements relative to the supporting mattresses, which gives less cause for decubitus.

The adjustment of the mattress holder portions 40-42 is possible in various ways, but will be further elucidated below with reference to fig. 4 as a particular embodiment. The foot end portion 42 of mattress holder 2 is hingedly coupled at 45 to the frame 1. The other end of the foot portion 42 is supported by a link construction 46 consisting of two arms, the upper of which is hingedly coupled on the underside to the holder 42 and the lower of which is supported hingedly at 47 on the support plate 48 of frame 1. The rotation points of both link elements 46 are mutually connected by a coupling rod 49 onto which engages a pull-push rod 50. The other end of pull-push rod 50 is connected to the threaded rod 51 of an electric motor 52.

The tray-like portion 40 for the head end is fixedly connected at a distance from the pivot line A-A to a lever 53, the free end of which is hingedly supported at 54 on the pull-push rod 50.

By displacing threaded rod 51 in lengthwise direction of the frame 1 by energizing the motor 52 in the one or other sense, the link construction 46 will be straightened to a greater or lesser degree, whereby the foot end portion 42 of the tray-like mattress holder 2 will assume a more or less slanting position. Because it hinges on rotation points 45 the centre tray-like portion 41 is carried along automatically, this being supported by the pivot points 43 of the head end portion 40. This latter is supported by the lever 53 whereby it assumes a steeper position than the foot end portion 42, and the sitting position can be reached as shown in fig. 4. The energizing of motor 52 in the reverse sense produces a fully straightened position of the tray-like portions 40-42 so that the patient thus comes into the lying position.

Turning now to fig. 5 the castor wheels 10 can be blocked electrically. Therefore the housing 60, in which the castor wheel itself is rotatably received according to common art, is provided with a ball bearing 61 connected to the cross beam 11 of the bed. Said cross beam 11 is provided with an orifice, in which a bushing 62 snugly fits, the downwardly extending portion 63 also supports the ball bearing 61. So the bushing 62 and the inner ring of the ball bearing 61 can be considered as part of the main frame of the bed.

The bushing 62 serves as a support for a motor and motor reductor part 64, 65, the driving shaft 66 of which is provided with a helical screw thread. Said shaft is co-operating with a hexagonal body 67 provided with an inner helical screw thread. Underneath said hexagonal body 67 a ball 68 is received in a recession in the lower extremity of said hexigonal body 67.

Furthermore a hexagonal stem 69 is arranged co-axially underneath said hexagonal body 67, which stem is provided with a locking disc 70.

The housing 60 of the castor wheel 10 is provided with a break arm 71, the one extremity of which is pivotably connected to the inner wall of the housing 60, said break arm extending partly around the periphery of the wheel 10 and partly horizontally therefrom. The horizontal extending portion 72 of the break arm 71 is provided with a support surface 73, co-operating with the lower surface 74 of the locking disc 70. Preferably the lower surface 74 is provided with dents or the like, co-operating with corresponding dents on the upper surface 73 of the break arm 72.

The break system according to fig. 5 works as follows:

By powering the motor 64, the shaft 66 will rotate in one direction in a lower RPM than the motor RPM due to the reduction transmission 65. The rotation of the shaft 66 provokes a lowering of the hexagonal body 67 urging the stem 69 downwards and urging the locking disc 70 on the upper surface 73 of the break arm 72. Therefore the break arm 72 will contact the periphery of the wheel 10, so blocking the rotation of the castor wheel 10. Moreover, the swivelling movement of the castor wheel 10 is also blocked due to the fact that the dents of the lower surface 74 of the disc 70 will contact the dents in the upper surface 73 of the break arm 72, so blocking a movement of the break arm 72 around the swivel axis A-A in fig. 5.

In this way by powering the motor 64 in one sense the rotation and the swivelling motion of the castor wheel 10 is blocked. The break action can be released by powering the motor 64 in a reverse sense so releasing the contact between the locking disc 70 and the break arm 71.

Fig. 6 depicts a keyboard, which is manually operatable by the bed ridden patient and the nursing personnel as well.

Therefore the keyboard is devided in two parts, the main part is connected by an electric cable to the electrical bed control means for controlling the different functions of the bed position and the locking of the castor wheels for instance.

However, the bed ridden patient is allowed for less functions to control than the nursing personnel carrying a releasable part 81 of the keyboard. The releasable part 81 can be fixed upon the main part 80 by a snap-on connection system, which upper part 81 is provided with more keys for more functions to control. The transmission of the signals from the keys to the main part 80 is provided for instance by an infra-red emitter 82 in the part 81 and a infra-red sensor 83 in the main part 80.

With such a control system the bed ridden patient is allowed to lower and raise the bed in a horizontal position and to lower and raise the back portion only.

The nursing personnel is allowed to bring the bed in the trendelerburger or anti trendelerburger position, to bring the bed in one action to the nursing heigth for easily manipulating the patient in the bed, to control the different positions of the matras holder 2, to park the bed by locking the castor wheels, to manoeuvre the bed by locking the swivelling actions of one or a pair of wheels at the foot or head end of the bed and/or to release or block all of the wheels.

Those functions are held for the nursing personnel and are not allowed to be controlled by the patient himself.

The invention is not limited to the above described embodiments, but solely limited by the scope of the appended claims.

## Claims

1. Bed, in particular a hospital bed, provided with a frame (1) for supporting a mattress or the like, a support structure bearing the frame (1) and having at least one pair of castor wheels (10) which are height-adjustable relative to the frame, wherein the or each pair of castor wheels (10) is arranged on the one end of a supporting member (13) having a constant length, wherein an associated shore element (21) is provided with an electric motor for changing the length of the shore element, and a second shore element (17) is arranged between said supporting member (13) and the bed frame (1), **characterized in that** the other end (14) of the support element (13) remote from the castor wheels (10) is slidable along a guide (15) of the frame (1), this such that with a small change in the length of the first shore element (21) a large angular rotation of the support element (13) takes place.

2. Bed as claimed in claim 1, **characterized in that** the distance between the pivot points of the second shore element is equal to that between the pivot point thereof with the support element to the castor wheel (10).

3. Bed as claimed in claims 1 or 2, **characterized in that** along the support element (13) is arranged a coupling rod (25) which on the one side is hingedly connected to a cross beam (11) connecting the castor wheels and on the other side to a triangular coupling plate (26) which is rotatably connected with another angular point to the support element (13), wherein the third angular point is coupled to a second coupling rod (27) which is hingedly arranged on the lower end of the frame (1).

4. Bed as claimed in any of the previous claims, **characterized in that** the frame (1) has on at least one of its ends an upward inclining portion (30) that serves to support bracket-like end pieces (31).

5. Bed as claimed in claim 4, **characterized in that** the frame is provided with a support block with two bores in which can be placed an accessory such as a headboard and/or footboard.

6. Bed as claimed in any of the previous claims, **characterized in that** the mattress holder is divided into sections which are hingedly coupled to each other.

7. Bed as claimed in claim 6, **characterized in that** the bed holder sections each take a tray or dish-like form, wherein the hinge line between the tray-like sections extends at a distance above the bottom of the tray-like sections.

8. Bed as claimed in claim 7, **characterized in that** at least the tray-like section (42) for the foot end portion is hingedly coupled (at 45) to the frame (1).

9. Bed as claimed in claim 8, **characterized in that** the foot end portion (42) of the mattress holder (2) is supported at a distance from the hinge line (45) by a link mechanism (46) which can be straightened or folded by an electric motor.

10. Bed as claimed in claim 9, **characterized in that** between the link mechanism (46) and the electric motor (52) a pull-push rod (50) is arranged on which is supported a bracket support (53) of the head section (40) of the mattress holder (2).

11. Bed as claimed in one of the previous claims 1-10, **characterized in that** one or more castor wheels are blocked by an electrically powered control system.

12. Bed as claimed in claim 11, **characterized in that** the castor wheel is provided with a break arm co-operating with the periphery of the wheel, said break arm is controlled by a disc-like break member co-axial with the swivelling axis of the wheel.

13. Bed as claimed in claim 12, **characterized in that** said disc-like break member is provided with an hexagonal stem slidably received in a hexagonal orifice of the motor support.

14. Bed as claimed in one of the previous claims, wherein the different electrically powered functions of the bed are controlled by a keyboard, **characterized in that** said keyboard is divided in at least two parts, one part being connected by a cable to the main control circuit of the bed, said other part being releasable fastened to said main part, whereas co-operating control signals emitting and sensing means are provided in said two parts.

## Patentansprüche

1. Bett, insbesondere ein Krankenhausbett, das mit einem Gestell (1) zum Tragen einer Matratze oder dergleichen versehen ist, wobei eine Tragstruktur das Gestell (1) hält und mindestens ein Paar Laufrollenräder (10) aufweist, die bezüglich des Gestells höhenverstellbar sind, worin das oder jedes Paar Laufrollenräder (10) an dem einen Ende eines Tragteils (13) mit einer konstanten Länge angeordnet ist, worin ein zugeordnetes Strebenelement (21) mit einem Elektromotor zum Ändern der Länge des Strebenelements versehen ist und ein zweites Strebenelement (17) zwischen dem Tragteil (13) und dem Bettgestell (1) angeordnet ist, **dadurch gekennzeichnet, daß** das andere, von den Laufrollenrädern (10) entfernte Ende (14) des Tragelements (13) entlang einer Führung (15) des Gestells (1) derart verschiebbar ist, daß bei einer kleinen Änderung in der Länge des ersten Strebenelements (21) eine große Winkeldrehung des Tragelements (13) stattfindet.

2. Bett nach Anspruch 1, **dadurch gekennzeichnet, daß** der Abstand zwischen den Drehpunkten des zweiten Strebenelements gleich dem zwischen dessen Drehpunkt bei dem Tragelement und dem Laufrollenrad (10) ist.

3. Bett nach einem der Ansprüche 1 oder 2, **dadurch gekennzeichnet, daß** entlang dem Tragelement (13) ein Koppelstange (25) angeordnet ist, die auf der einen Seite mit einem die Laufrollenräder verbindenden Querbalken (11) und auf der anderen Seite mit einer dreieckigen Koppelplatte (26) schwenkbar verbunden ist, welche bei einem anderen Winkelpunkt mit dem Tragelement (13) drehbar verbunden ist, worin der dritte Winkelpunkt mit einer zweiten Koppelstange (27) gekoppelt ist, die an dem unteren Ende des Gestells (1) schwenkbar angebracht ist.

4. Bett nach einem der vorhergehenden Ansprüche, **dadurch gekennzeichnet, daß** das Gestell (1) an mindestens einem seiner Enden ein aufwärts geneigtes Teilstück (30) aufweist, das dazu dient, armartige Endstücke (31) zu tragen.

5. Bett nach Anspruch 4, **dadurch gekennzeichnet, daß** das Gestell mit einem Tragblock mit zwei Bohrungen versehen ist, in denen eine Zusatzeinrichtung, wie zum Beispiel ein Kopfbrett und/oder Fußbrett, angebracht werden kann.

6. Bett nach einem der vorhergehenden Ansprüche, **dadurch gekennzeichnet, daß** der Matratzenhalter in Teile eingeteilt ist, die schwenkbar miteinander gekoppelt sind.

7. Bett nach Anspruch 6, **dadurch gekennzeichnet, daß** die Betthalterteile jeweils eine schalen- oder schüsselartige Form einnehmen, worin sich die Gelenklinie zwischen den schalenartigen Teilen bei einem Abstand über dem Boden der schalenartigen Teile erstreckt.

8. Bett nach Anspruch 7, **dadurch gekennzeichnet, daß** zumindest der schalenartige Teil (42) für das Fußendteilstück (bei 45) mit dem Gestell (1) schwenkbar gekoppelt ist.

9. Bett nach Anspruch 8, **dadurch gekennzeichnet, daß** das Fußendteilstück (42) des Matratzenhalters (2) bei einem Abstand von der Gelenklinie (45) durch einen Verbindungsmechanismus (46) getragen wird, der durch einen Elektromotor geradegerichtet oder zusammengeklappt werden kann.

10. Bett nach Anspruch 9, **dadurch gekennzeichnet, daß** zwischen dem Verbindungsmechanismus (46) und dem Elektromotor (52) eine Zug-Schub-Stange (50) angeordnet ist, an der ein Armträger (53) des Kopfteils (40) des Matratzenhalters (2) getragen wird.

11. Bett nach einem der vorhergehenden Ansprüche 1-10, **dadurch gekennzeichnet, daß** ein oder mehr Laufrollenräder durch ein elektrisch betriebenes Steuersystem blockiert werden.

12. Bett nach Anspruch 11, **dadurch gekennzeichnet, daß** das Laufrollenrad mit einem mit dem Umfang des Rades zusammenwirkenden Bremsarm versehen ist, wobei der Bremsarm durch ein scheibenartiges, mit der Schwenkachse des Rades koaxial verlaufendes Bremsteil gesteuert wird.

13. Bett nach Anspruch 12, **dadurch gekennzeichnet, daß** das scheibenartige Bremsteil mit einer hexagonalen Stange versehen ist, die in einer hexagonalen Öffnung des Motorträgers verschiebbar aufgenommen wird.

14. Bett nach einem der vorhergehenden Ansprüche, worin die verschiedenen elektrisch betriebenen Funktionen des Bettes durch eine Tastatur gesteuert werden, **dadurch gekennzeichnet, daß** die Tastatur in mindestens zwei Teile eingeteilt ist, wobei ein Teil durch ein Kabel mit dem Hauptsteuerkreis des Bettes verbunden ist, der andere Teil an dem Hauptteil lösbar befestigt ist, während zusammenwirkende, Steuersignale emittierende und abfühlende Mittel in den beiden Teilen vorgesehen sind.

## Revendications

1. Lit, en particulier lit d'hôpital, muni d'un bâti (1) pour supporter un matelas ou équivalent, une structure de support portant le bâti (1) et ayant au moins une paire de roues à roulettes (10) qui sont ajustables en hauteur par rapport au bâti, dans lequel la ou chaque paire de roues à roulettes (10) est agencée sur la première extrémité d'un élément (13) de support ayant une longueur constante, dans lequel un élément d'étai associé (21) est muni d'un moteur électrique pour changer la longueur de l'élément d'étai, et un second élément d'étai (17) est agencé entre ledit élément de support (13) et le bâti (1) du lit, caractérisé en ce que l'autre extrémité (14) de l'élément de support (13) éloignée des roues à roulettes (10) est coulissant le long d'un guide (15) du bâti (1), ceci de sorte que, avec une variation petite dans la longueur du premier élément d'étai (21), une rotation angulaire importante de l'élément de support (13) est réalisée.

2. Lit selon la revendication 1, caractérisé en ce que la distance entre les points de pivot du second élément d'étai est égale à celle entre son point de pivot avec l'élément de support et la roue à roulettes (10).

3. Lit selon les revendications 1 ou 2, caractérisé en ce que le long de l'élément de support (13) est agencée une tige de couplage (25) qui sur le premier côté est reliée de manière articulée à une barre transversale (11) reliant les roues à roulettes et sur l'autre côté à une plaque de couplage triangulaire (26) qui est reliée de manière rotative avec un autre point d'angle à l'élément de support (13), dans lequel le troisième point d'angle est couplé à une seconde tige de couplage (27) qui est agencée de manière articulée sur l'extrémité inférieure du bâti (1).

4. Lit selon l'une quelconque des revendications précédentes, caractérisé en ce que le bâti (1) a sur au moins l'une de ses extrémités, une partie inclinée vers le haut (30) qui sert à supporter des pièces d'extrémité en forme de console (31).

5. Lit selon la revendication 4, caractérisé en ce que le bâti est muni d'un bloc support avec deux trous dans lesquels peut être placé un accessoire tel qu'un panneau de pied ou un panneau de tête.

6. Lit selon l'une quelconque des revendications précédentes, caractérisé en ce que le support de matelas est divisé en sections qui sont couplées de manière articulée l'une à l'autre.

7. Lit selon la revendication 6, caractérisé en ce que les sections de support de lit prennent chacune une forme de plateau ou de cuvette, dans lequel la ligne d'articulation entre les sections en plateau s'étend à une distance au-dessus du fond des sections en plateau.

8. Lit selon la revendication 7, caractérisé en ce qu'au moins la section en plateau (42) pour la portion d'extrémité de pied est couplée de manière articulée (en 45) au bâti (1).

9. Lit selon la revendication 8, caractérisé en ce que la portion d'extrémité de pied (42) du support de matelas (2) est supportée à une distance depuis la ligne d'articulation (45) par un mécanisme à bielle (46) qui peut être dressé ou replié par un moteur électrique.

10. Lit selon la revendication 9, caractérisé en ce que, entre le mécanisme à bielle (46) et le moteur électrique (52), une tige de poussée-traction (50) est agencée sur laquelle est supporté un support (53) de console de la section de tête (40) du support de matelas (2).

11. Lit selon l'une quelconque des revendications 1 à 10, caractérisé en ce qu'une ou plusieurs roues à roulettes sont bloquées par un système de commande alimenté électriquement.

12. Système selon la revendication 11, caractérisé en ce que la roue à roulettes est munie d'un bras de freinage coopérant avec la périphérie de la roue, ledit bras de freinage est commandé par un élément de freinage en forme de disque coaxial à l'axe de rotation de la roue.

13. Lit selon la revendication 12, caractérisé en ce que l'élément de freinage en forme de disque est muni d'une tige hexagonale reçue de manière coulissante dans un orifice hexagonal du support de moteur.

14. Lit selon l'une quelconque des revendications précédentes, dans lequel les différentes fonctions alimentées électriquement du lit sont commandées par un clavier, caractérisé en ce que ledit clavier est divisé en au moins deux parties, une partie étant reliée par un câble au circuit de commande principal du lit, l'autre partie étant fixée de manière démontable à ladite partie principale, tandis que des moyens de détection et d'émission de signaux de commande coopérant sont prévus dans lesdites deux parties.
